(19) **Europäisches Patentamt / European Patent Office / Office européen des brevets**

(11) **EP 2 161 699 B1**

(12) **EUROPÄISCHE PATENTSCHRIFT**

(45) Veröffentlichungstag und Bekanntmachung des Hinweises auf die Patenterteilung:
**04.01.2012 Patentblatt 2012/01**

(51) Int Cl.:
*G08G 1/0967* (2006.01)   *B60W 50/08* (2012.01)
*B60W 30/14* (2006.01)

(21) Anmeldenummer: **09162748.9**

(22) Anmeldetag: **16.06.2009**

(54) **Fahrerinformationsvorrichtung zur vorausschauenden Warnung des Fahrers eines Fahrzeugs bei überhöhter Geschwindigkeit**

Driver information device with predictive warning for the driver if the speed is too high

Dispositif d'information du conducteur pour l'alerte prévisionnelle du conducteur d'un véhicule en cas de vitesse excessive

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **05.08.2008   DE 102008040982**

(43) Veröffentlichungstag der Anmeldung:
**10.03.2010   Patentblatt 2010/10**

(73) Patentinhaber: **ROBERT BOSCH GMBH 70442 Stuttgart (DE)**

(72) Erfinder:
• **Mueller, Guido 06484, Quedlinburg (DE)**
• **Pirklbauer, Stefan 31079, Sibbesse (DE)**

(56) Entgegenhaltungen:
WO-A2-2007/024365   WO-A2-2009/129794
DE-A1- 10 358 968   US-A1- 2005 083 211

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die Erfindung betrifft eine Fahrerinformationsvorrichtung mit einer Ortungseinheit zur Bestimmung der aktuellen Fahrzeugposition, Mitteln zur Erfassung der Ist-Fahrzeuggeschwindigkeit sowie mit Mitteln zur Ausgabe von Informationen an den Fahrer.

Aus der DE 197 25 075 A1 ist ein GPS-gestütztes Geschwindigkeitswarnsystem bekannt, das die im Navigationssystem gespeicherten digitalen Kartendaten verwendet, wobei eine Aktualisierung der gespeicherten administrativ vorgegebenen Höchstgeschwindigkeitswerte erfolgen kann, beispielsweise per Funk.

Derartige bekannte Geschwindigkeitswarnsysteme in Navigationsgeräten zeigen die aktuellen Geschwindigkeitsbegrenzungen nur für die aktuelle Fahrzeugposition als Information an und geben eine Warnung nur dann aus, wenn sich das Fahrzeug aktuell auf einem Streckenabschnitt befindet, auf dem eine Geschwindigkeitsbegrenzung besteht und diese Grenze durch die aktuell gefahrene Geschwindigkeit überschritten wird. Die Unterscheidung ob gewarnt wird oder nicht ist demnach hart an die Attribute der aktuellen Fahrzeugposition gekoppelt. Eine Warnung wird ausgegeben, wenn die aktuelle Fahrzeuggeschwindigkeit eine einstellbare Geschwindigkeitstoleranzschwelle (absolut oder prozentual) über der aktuellen Geschwindigkeitsbegrenzung überschreitet. Aufgrund der harten Kopplung an die aktuelle Fahrzeugposition hat der Fahrer im Wesentlichen nur die Wahl zwischen einer Vollbremsung oder einer Übertretung der vorgegebenen Höchstgeschwindigkeit im ersten Teil des zugehörigen Geltungsbereiches.

Aus der DE 103 58 968 A1 ist eine Fahrgeschwindigkeitsregelvorrichtung für ein Kfz bekannt, die mit einem Navigationssystem verbunden ist. Im Hinblick auf einen komfortablen automatischen Übergang von einer erhöhten Ist-Geschwindigkeit auf eine vorausliegend vorgegebene Höchstgeschwindigkeit erfolgt eine vorausschauende Empfehlung an den Fahrer, damit dieser eine neue Soll-Fahrzeuggeschwindigkeit in die Regelvorrichtung eingibt, so dass diese selbsttätig auf die vorausliegende vorgegebene Höchstgeschwindigkeit abbremsen kann. Dabei ist es auch bekannt, dass die Empfehlung mindestens so rechtzeitig veranlasst wird, dass die Ist-Geschwindigkeit mit einem vorgebbaren Verzögerungsverlauf auf die ab einer vorausliegenden definierten Position vorgegebene Höchstgeschwindigkeit reduzierbar ist.

Die Offenlegungsschrift WO 2007/024365 A2 zeigt ein Navigationssystem für ein Fahrzeug umfassend eine Kartendatenbank und eine Lokalisierungsvorrichtung zum Anzeigen der Fahrzeugposition relativ zu der Kartendatenbank. Das System umfasst ferner eine Anzeigevorrichtung, welche dem Fahrer signalisiert, wenn sich das Fahrzeug beispielsweise vor einem Straßenabschnitt mit einer Geschwindigkeitsbegrenzung befindet.

Offenbarung der Erfindung

Die erfindungsgemäße Fahrerinformationsvorrichtung ist in Anspruch 1 gekennzeichnet. Weiterbildungen und bevorzugte Maßnahmen ergeben sich aus den Unteransprüchen.

Bei der erfindungsgemäßen Fahrerinformationsvorrichtung sind eine Ortungseinheit zur Bestimmung der aktuellen Fahrzeugposition, Mittel zur Erfassung der Ist-Fahrzeuggeschwindigkeit, eine Anzeigeeinheit, sowie eine Einrichtung zum Überwachen eines ausgehend von der aktuellen Fahrzeugposition vor dem Fahrzeug liegenden Streckenverlaufs, die Mittel zur Erkennung einer vorgegebenen streckenabhängigen Höchstgeschwindigkeit umfasst, vorgesehen. Weiterhin erfindungsgemäß vorgesehen ist, dass die Einrichtung zum Überwachen bei aktuellem Überschreiten einer vorausliegenden vorgegebenen Höchstgeschwindigkeit die Ausgabe einer Bremsempfehlung mindestens so rechtzeitig veranlasst, dass die Ist-Geschwindigkeit mit einem vorgebbaren Verzögerungsverlauf auf die ab einer vorausliegenden definierten Position vorgegebene Höchstgeschwindigkeit reduzierbar ist, wobei die Bremsempfehlung durch eine Warnung bezüglich der vorausliegenden vorgegebenen Höchstgeschwindigkeit ersetzt wird, sobald das Fahrzeug mit dem vorgebbaren Verzögerungsverlauf bis zur vorausliegenden definierten Position nicht mehr auf die vorgegebene Höchstgeschwindigkeit abbremsbar ist.

Die Erfindung beruht darauf, die Information und Warnung bezüglich der Geschwindigkeitsbegrenzung um eine Bremsempfehlung für eine angenehme und komfortable Reduzierung der Geschwindigkeit zu erweitern und die Bremsempfehlung durch eine vorausschauende Warnung beziehungsweise Information zu ersetzen, sobald das Fahrzeug nicht mehr komfortabel abbremsbar ist. Diese erfindungsgemäße Bremsempfehlung, beziehungsweise Information und Warnung, soll dem Fahrer im Gegensatz zur herkömmlichen Information und Warnung nicht erst gegeben werden, wenn dieser sich schon auf dem limitierten Straßenabschnitt befindet, sondern so rechtzeitig, dass er das Fahrzeug komfortabel - oder, bei vorausschauender Warnung, wenigstens ohne Vollbremsung - auf die erforderliche Geschwindigkeit abbremsen kann, damit die Geschwindigkeitsbegrenzung nicht überschritten wird.

Gemäß einer als besonders vorteilhaft angesehenen Ausführungsform der Erfindung wird der Verzögerungsverlauf so vorgegeben, dass die maximale Bremsverzögerung je nach gewünschtem Komfort einen vorbestimmten Wert nicht überschreitet, wobei der Wert der maximalen Bremsverzögerung von Parametern, die beispielsweise vom Fahrer eingegeben oder von Fahrzeugsensoren ermittelt werden, abhängig ist. Die Parameter können auch durch ein Navigationssystem beziehungsweise durch die vorliegenden Daten bekannt sein.

Kurze Beschreibung der Zeichnungen

Figur 1 zeigt eine mögliche erfindungsgemäße Visualisierung der Geschwindigkeitsbegrenzungsanzeigen (Bremsempfehlung, Information, Warnung) mithilfe von Verkehrszeichen-Symbolen,

Figur 2 zeigt einen möglichen Verzögerungsverlauf mit zugehöriger Visualisierung der Geschwindigkeitsbegrenzungsanzeigen,

Figur 3 bis 5 zeigen weitere mögliche Visualisierungen von Geschwindigkeitsbegrenzungsanzeigen,

Figur 6 zeigt einen möglichen, sich unter Berücksichtigung von Toleranzen ergebenden Verzögerungsverlauf mit zugehöriger Visualisierung der Geschwindigkeitsbegrenzungsanzeigen.

Ausführungsform der Erfindung

In den nachfolgenden Figuren sind für die Warnung, Information und den Bremshinweis Anzeigebeispiele dargestellt, die erfindungsgemäß auch durch andere Symbole mit geschwindigkeitsrelevanter Bedeutung ersetzt werden können. Im Display der Fahrerinformationsvorrichtung werden die zu einer gleichen Höchstgeschwindigkeit gehörigen Geschwindigkeitsbegrenzungsanzeigen typischerweise durch unterschiedliche Farben differenziert. Die unterschiedliche optische Kennzeichnung kann beispielsweise jedoch auch durch die Art des Symbols oder eine Zusatzkennzeichnung erfolgen. Erfindungsgemäß kann die Ausgabe der geschwindigkeitsbezogenen Hinweise statt durch optische Anzeige auch durch andere, beispielsweise akustische Informationen erfolgen. Dies kann beispielsweise durch einen einfachen Signalton, beziehungsweise eine Tonfolge, oder durch eine konkrete menschenverständliche Sprachausgabe realisiert werden.

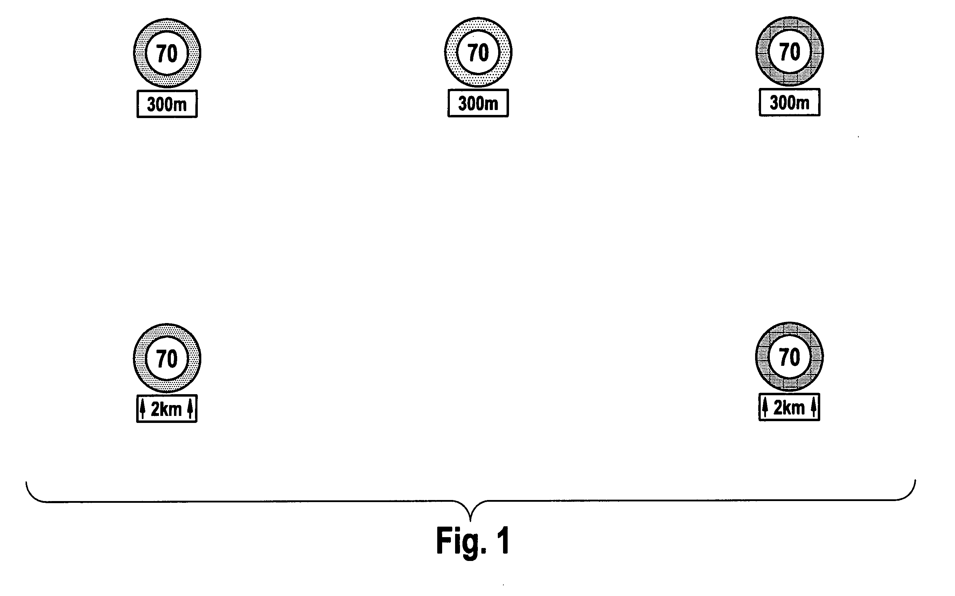

Figur 1 zeigt in ihrem oberen Teil beispielhalber eine Situation 300m vor einer administrativ vorgegebenen Geschwindigkeitsbegrenzung (70 km/h), während im unteren Teil der Figur 1 die Anzeigesituation innerhalb der Geschwindigkeitsbegrenzung dargestellt ist. Zusätzlich zu den Geschwindigkeitsbegrenzungsanzeigen sind die im Straßenverkehr für den Geltungsbereich typischen Zusatzschilder zu erkennen, die eine Möglichkeit darstellen, den örtlichen Bezug der Geschwindigkeitsbegrenzung zu verdeutlichen. Für die Anzeige im Voraus beziehen sich die Entfernungsangaben auf die Distanz zwischen der aktuellen Fahrzeugposition und dem Anfang der Geschwindigkeitsbegrenzung, wobei die angezeigte Entfernung aktualisiert wird. Innerhalb der Geschwindigkeitsbegrenzung wird die Entfernung von der aktuellen Fahrzeugposition bis zum Ende der Geschwindigkeitsbegrenzung angezeigt und wird während der Fahrt aktualisiert. In diesem Bereich wird kein Bremshinweis BH mehr ausgegeben. Eine vorausschauende Information SI, vergleiche Figur 1, wird in der Situation beziehungsweise mit der Bedeutung ausgegeben, dass die aktuelle Fahrzeuggeschwindigkeit im vorausliegenden Limit ist. Eine vorausschauende Bremsempfehlung BH andererseits wird ausgegeben, wenn die Geschwindigkeit aktuell zu hoch ist. Die weitere Bedeutung der Bremsempfehlung geht dahin, dass gebremst werden sollte und dass dies noch komfortabel möglich ist. Eine vorausschauende Warnung SW wird ausgegeben, wenn die aktuelle Geschwindigkeit zu hoch ist und gebremst werden muss, auch wenn es für eine komfortable Bremsung bereits zu spät ist. Innerhalb der Geschwindigkeitsbegrenzung wird lediglich eine Information SLI ausgegeben, wenn die aktuelle Fahrzeuggeschwindigkeit im Geschwindigkeitslimit liegt. Ist die Geschwindigkeit immer noch zu hoch, so wird die rechts unten in der Figur 1 dargestellte Warnung SLW ausgegeben: Es muss gebremst werden.

Die hier nicht dargestellte Fahrerinformationsvorrichtung weist typischerweise ein Navigationssystem auf, dem der Verlauf des Straßennetzes, das vor dem Fahrzeug liegt (auch Positionshorizont oder Streckenverlauf genannt) mit den in den digitalen Kartendaten enthaltenen Attributen bekannt ist, so dass jedenfalls die Fahrerinformationsvorrichtung über die zur Bestimmung der Warnung und der Hinweise notwendigen Attribute verfügt. Somit sind auch Geschwindigkeitsbegrenzungen innerhalb des Positionshorizontes bekannt und können dazu genutzt werden, dem Fahrzeugführer entsprechende Hinweise zu geben, wenn er aufgrund seiner gerade gefahrenen Geschwindigkeit im Begriff ist, eine Geschwindigkeitsbegrenzung zu übertreten. So ist es möglich, dem Fahrer rechtzeitig eine Bremsempfehlung auszugeben, dass er das Fahrzeug abbremsen soll und es auch tatsächlich noch komfortabel abbremsen kann. Aus der Kenntnis, wie weit die Position des Beginns der Geschwindigkeitsbegrenzung noch voraus liegt, beziehungsweise bis zu welchem Zeitpunkt diese definierte Position erreicht wird, kann bestimmt werden, bis zu welchem Zeitpunkt spätestens (das heißt, unter Berücksichtigung einer Reaktionszeit des Fahrers) eine Bremsempfehlung an den Fahrer zu veranlassen ist, um eine Geschwindigkeitsbegrenzung komfortabel und bereits ab Erreichen des Geltungsbeginns des Limits einzuhalten.

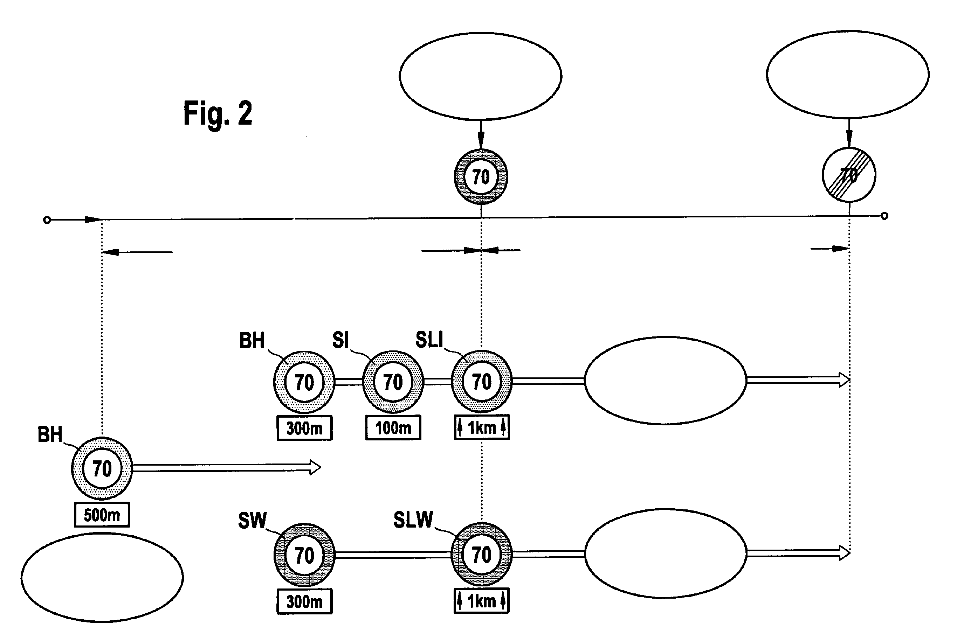

Anhand der Darstellung gemäß Figur 2 soll für einen beispielhaften Streckenabschnitt die Anzeige von Information, Warnung und Bremshinweis bezüglich einer Geschwindigkeitsbegrenzung illustriert werden. Nach Ausgabe der Bremsempfehlung BH müssen dabei zwei Szenarien unterschieden werden.

Variante A: Der Fahrer bremst.

Hierbei gilt der Bremshinweis BH solange, bis das Fahrzeug auf die im Voraus befindliche Geschwindigkeitsbegrenzung abgebremst ist. Danach wird die im Voraus befindliche Geschwindigkeitsbegrenzung als Information SI solange angezeigt, bis die Geschwindigkeitsbegrenzung gilt. Ab diesem Punkt wird dann die Geschwindigkeitsbegrenzung als Information SLI gezeigt.

Variante B: Der Fahrer bremst nicht (oder nicht ausreichend).

In diesem Szenario wird die Bremsempfehlung durch die Geschwindigkeitswarnung SW abgelöst, wenn ein komfortables Bremsen nicht mehr möglich ist. Ab diesem Zeitpunkt wird die entsprechende Warnung SW für die im Voraus befindliche Geschwindigkeitsbegrenzung solange angezeigt, bis die Geschwindigkeitsbegrenzung gilt und dieses Limit nicht eingehalten wird.

Im Übrigen sind neben der Geschwindigkeitswarnung über die Anzeige im Display und eines akustischen Hinweises auch Vibrationshinweise über das Lenkrad oder die Pedale möglich. Ferner ist auch denkbar, den aufzubringenden Druck auf das Gaspedal leicht zu erhöhen, um dem Fahrer zu signalisieren, dass eine weitere Beschleunigung nicht richtig ist.

Der erfindungsgemäße Bremshinweis soll dem Fahrer helfen, die geforderten Geschwindigkeitsbeschränkungen einzuhalten und dabei das Fahren für seine Mitfahrer und sich selbst so angenehm wie möglich zu machen. Deshalb darf der Bremshinweis nicht zu spät gegeben werden, sondern muss ein komfortables Bremsen ermöglichen. Das bedeutet, dass die Bremsverzögerung je nach gewünschtem Komfort einen bestimmten Wert nicht überschreiten darf. Die maximale Verzögerung für das komfortable Bremsen hängt dabei von verschiedenen Faktoren ab. So sind Fahrzeug- und Fahrerspezifische, globale und lokale Aspekte zu berücksichtigen, wobei sich die maximale Bremsverzögerung durch das Minimum des Betrags der verschiedenen Maximalwerte ergibt.

Fahrzeugtypische Faktoren:

Je nach Fahrzeugtyp sind unterschiedliche Bremsverzögerungen technisch möglich, z.B. kann ein LKW anders bremsen als ein Sportwagen.

Fahrstiltypische Faktoren:

Der gewünschte Fahrstil definiert ebenfalls die maximale Bremsverzögerung, was zum einen vom persönlichen Fahrstil und zum anderen von den Mitreisenden, bzw. der Ladung (Gewicht und Gefährdung der Ladung oder Umwelt) abhängt.

Wetterspezifische Faktoren:

Bei bestimmten ungünstigen Wetterbedingungen (Regen, Eis oder Schnee) kann die Bremswirkung deutlich herabgesetzt sein.

Lokale Fahrbahnbeschaffenheit:

Einige Straßenbeläge (z.B. Kopfsteinpflaster) haben ebenfalls eine negative Auswirkung auf die maximal mögliche Bremsverzögerung und sollten berücksichtigt werden. Des Weiteren haben auch Gefälle oder Neigungen in der Straße einen negativen Einfluss und erfordern eine angepasste Bremskraft.

Neben der eigentlichen Geschwindigkeitsbegrenzung sind die oben genannten Parameter erforderlich, um den Zeitpunkt für den Bremshinweis zum komfortablen Bremsen zu bestimmen. Diese zusätzlichen Parameter können durch den Fahrer im HMI eingegeben werden (Fahrzeugtypisch und Fahrstil), können durch Fahrzeugsensoren übermittelt werden (Regen oder Temperatur) und können in den Navigationsdaten gespeichert sein.

Ferner ist aber auch denkbar, dass einige dieser Aspekte (Fahrzeugtypische oder der Fahrstil) sukzessive durch das System gelernt werden. Dabei können insbesondere durch die elektronischen Stabilisierungssysteme des Fahrzeugs (ASB, ESP ...) kritische Situationen ermittelt und mit ihren Randbedingungen in der Navigation abgespeichert werden, so dass diese Daten bei ähnlichen Situationen oder an der gleichen Stelle für den Bremshinweis berücksichtigt werden können.

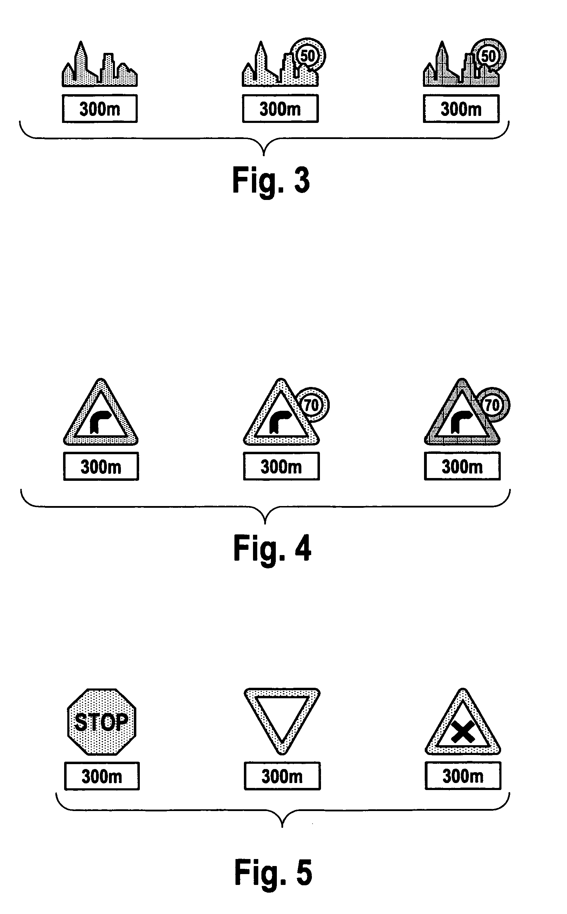

Die erfindungsgemäße Fahrerinformationsvorrichtung bezieht sich nicht nur auf administrativ direkt vorgegebene Geschwindigkeitsbeschränkungen. Vielmehr können die erfindungsgemäßen Bremshinweise vorteilhaft auch bei indirekten Geschwindigkeitsbeschränkungen ausgegeben werden. Die Straßenverkehrsordnung sieht bestimmte Höchstgeschwindigkeiten für Straßen oder Gebiete vor, wobei diese durch ein besonderes Schild gekennzeichnet sind, ohne das auf diesem die zulässige Höchstgeschwindigkeit steht. Beispiele hierfür sind Ortseingangsschilder in Deutschland oder Spielstraßen. Figur 3 zeigt entsprechende mögliche Visualisierungen der Information, Bremsempfehlung und Warnung.

Neben derartigen direkt oder indirekt vorgegebenen Tempolimits ergeben sich aber auch noch andere indirekte empfohlene Maximalgeschwindigkeiten, z.B. aufgrund von Kurven, Gefälle oder anderen Gefahrpunkten. Mit der möglichen Gefährdung der Fahrsicherheit geht eine entsprechende Grenzgeschwindigkeit einher, die auch zu einer erfindungsgemäßen Bremsempfehlung führen kann. Figur 4 zeigt beispielhaft eine Anzeige der Geschwindigkeitsbegrenzungsanzeigen an gefährlichen Kurven.

Neben Bremshinweisen zur Erreichung einer direkt oder indirekt benannten Höchstgeschwindigkeit sind auch Bremshinweise bezüglich der Vorfahrtsregeln oder Fahrmanöver an Kreuzungen möglich. So ist bei einem Stoppschild das Anhalten zwingend vorgeschrieben und bei einem "Vorfahrt beachten" eine angemessene Geschwindigkeit angeraten. Entsprechende Geschwindigkeitsbegrenzungsanzeigen können wie in Figur 5 dargestellt visualisiert werden.

Korrespondierend zu den Bremshinweisen werden die Schildersymbole dann auch real, d.h. rot eingefärbt, wenn die Geschwindigkeit nicht angemessen erscheint, um entsprechend des möglichen Verkehrs zu reagieren.

Schließlich sind auch entlang einer zielgeführten Route bestimmte Fahrmanöver durchzuführen, die eine Absenkung der Geschwindigkeit erfordern. So ist im Rechtsverkehr bei einem Linksabbiegen sehr oft ein Stopp erforderlich, oder das "Scharf rechts abbiegen" erfordert eine deutlich geringere Geschwindigkeit als das "Rechts fahren". In Abhängigkeit von diesen Manövern ergeben sich somit entsprechende kritische Geschwindigkeiten, für die eine korrespondierende Bremsempfehlung gegeben werden kann.

Bei der technische Umsetzung der Ermittlung der Bremsempfehlung können an sich bekannte Toleranzschwellen (akzeptierte absolute oder relative Geschwindigkeitsübertretung) ohne weiteres implementiert werden, so dass sie auch im Zusammenhang mit der erfindungsgemäßen Bremsempfehlung weiter gelten. Sinnvoll erscheinen noch zwei weitere, neue Toleranzbereiche, innerhalb derer die Warnung nicht ausgegeben werden soll. Bei der Berechnung des Bremshinweises und bei der Bestimmung der Warnung werden diese Toleranzen berücksichtigt, weshalb die entsprechenden Werte (im Folgenden gekennzeichnet durch *) verwendet werden.

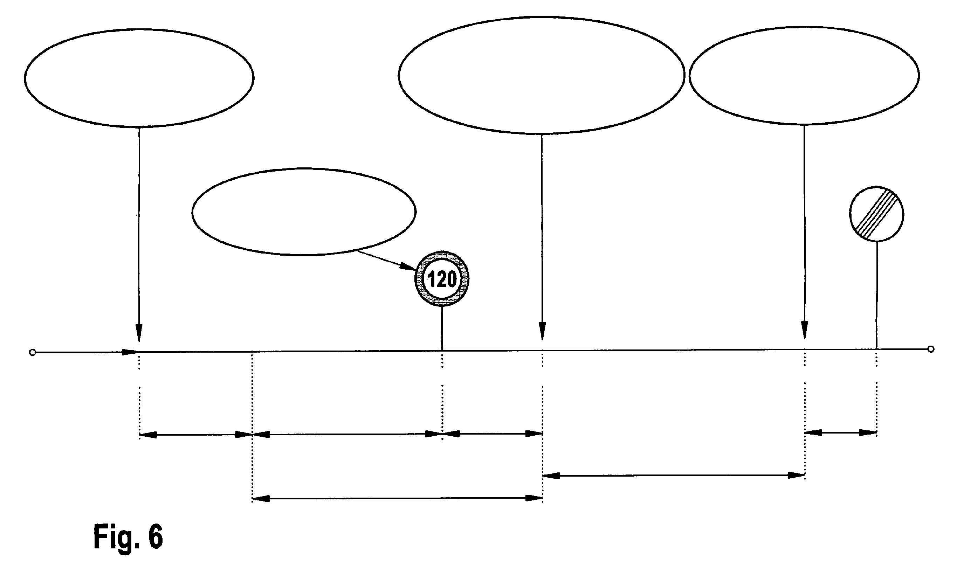

In Figur 6 ist - entlang einer Streckenverlaufsachse - beispielhaft eine Anzeige des Bremshinweises unter Berücksichtigung der im Folgenden definierten Toleranzbereiche dargestellt. Erkennbar wird die Warnung im Toleranzbereich $\Delta d_{In}$ noch nicht und im Toleranzbereich $\Delta d_{out}$ nicht mehr ausgegeben.

Für die Bewertungen und Berechnungen werden folgende Variablen verwendet (GI bedeutet Gültigkeitsintervall):

| Formelzeichen | GI | Beschreibung |
|---|---|---|
| $t_{REACT}$ | >=0 s | Reaktionszeit zwi- schen Ausgabe des Bremshinweises und Ein- leitung des Bremsvorganges |
| $\Delta v$ | >=0 m/s | vom Fahrer tolerierte Geschwindigkeitsüberschreitung (kann un- terschiedlich sein für inne- rorts/außerorts) |
| $\Delta d_{In}$ | >=0 m | vom Fahrer tolerierte Distanz vom Beginn der Geschwindigkeits- begrenzung bis zu dem Punkt, an dem er die begrenzte Geschwindigkeit erreicht haben will |
| $\Delta d_{out}$ | >=0 m | vom Fahrer tolerierte Distanz vor dem Ende der Geschwindig- keitsbegrenzung, ab dem er wieder be- schleunigen will, ohne eine Warnung zu hören (obwohl das Ende der Geschwindigkeitsbegrenzung noch nicht erreicht ist) |
| $V_{Current}$ | >=0 | m/s aktuell gefahrene Geschwindigkeit |
| $V_{Average}$ | >=0 | m/s gleitender Mittelwert der gefahrenen Geschwindigkeit in den je- weils vergangenen n Sekunden |
| $V_{Limit}$ | >=0 m/s | administrative Höchstgeschwindigkeit in der Geschwindig- keitsbegrenzung |
| $v^*_{Limit}$ | >=0 m/s | vom Fahrer tolerierte Höchstgeschwindigkeit in der Geschwindig- keitsbegrenzung: ($V^*_{Limit} = V_{Limit} + \Delta v$) |

| $P_{Start}$ | Beginn der realen Geschwindigkeitsbegrenzung |
|---|---|
| $P^*_{Start}$ | Beginn des Geschwindigkeitswarnungsbereichs (inklusive Tole- ranzstrecke $\Delta_{dIn}$) |
| $P_{Ende}$ | Ende der realen Geschwindigkeitsbegrenzung |
| $P^*_{Ende}$ | Ende des Geschwindig- keitswarnungsbereichs (inklusive Tole- ranzstrecke $\Delta d_{out}$) |
| $d_{Break}$ | >=0 m      notwendige Strecke zum komfortablen Bremsen |
| $a_{Comfort,Max}$ | ca. (-3...-5) m/s²      maximale Bremsverzö- gerung zum komfortablen Bremsen |
| $P_{Hinweis}$ | Punkt, an welchem der Hinweis für ein komfortables Bremsen aus- gegeben wird |
| SLI | Information über die Höchstgeschwindigkeit innerhalb einer Ge- schwindigkeitsbeschränkung |
| SI | Information über eine Geschwindigkeitsbeschränkung |
| SLW | Warnung bezüglich der Höchstgeschwindigkeit innerhalb einer Ge- schwindigkeitsbeschränkung |
| SW | Warnung vor einer Ge- schwindigkeitsbeschränkung |
| BH | Bremshinweis vor ei- ner Geschwindigkeitsbeschränkung |

In einem Navigationssystem sind die aktuelle Position sowie der Positionshorizont (die Straßenabschnitte, die noch vor dem Fahrzeug liegen und zukünftig potentiell befahren werden könnten) bekannt. Des Weiteren ist dem Navigationssystem der Pfad im Positionshorizont bekannt, dem der Fahrer am wahrscheinlichsten folgen wird (MPP, MostProbablePath) und für den die Hinweise vorzugsweise erfolgen. (Prinzipiell können die vorgegebenen streckenabhängigen Höchstgeschwindigkeiten jedoch auch ohne Navigationssystem, beispielsweise durch optische Mittel zur Verkehrszeichenerkennung, ermittelt werden.

Bereits vor dem Beginn eines Straßenabschnittes mit Geschwindigkeitsbegrenzung berechnet das Navigationssystem, ob der Fahrzeugführer noch die Möglichkeit hat, mit einer komfortablen Verzögerung (= negative Beschleunigung) die aktuelle Geschwindigkeit so weit zu drosseln, dass er die kommende Geschwindigkeitsbegrenzung $V^*_{Max}$ nicht überschreitet, wenn er ihren Beginn $P^*_{Start}$ erreicht hat. Der Bremshinweis BH wird so rechtzeitig ausgegeben, dass der Fahrer genügend Zeit zum Bremsen hat.

Ausgehend vom aktuell gültigen Wert der maximalen komfortablen Bremsverzögerung $a_{Comfort,Max}$ lässt sich mit folgender Formel die Entfernung bestimmen, an der der Bremshinweis gegeben werden muss (vergleiche die bekannte Formel s = 1/2*a*t², die für eine gleichmäßig beschleunigte Bewegung gilt):

$$d = \frac{(v_{Limit} + \Delta v)^2 - v_{Current}^2}{2 \cdot a_{Comfort,Max}} - \Delta d + v_{Current} \cdot t_{React}$$

Nach der Ausgabe des Bremshinweises BH muss permanent bis zum Beginn der Geschwindigkeitsbeschränkung $P^*_{Start}$ bewertet werden, ob mit der komfortablen Bremsverzögerung in der verbleibenden Entfernung bis zur Geschwindigkeitsbeschränkung die Höchstgeschwindigkeit $V^*_{Limit}$ erreicht werden kann.

$$a_{Necessary} = \frac{(v_{Limit} + \Delta v)^2 - v_{Current}^2}{2(d + \Delta d - v_{Current} \cdot t_{React})}$$

Basierend auf dem ermittelten Wert für die erforderliche Bremsbeschleunigung muss nach erstmaliger Ausgabe des Bremshinweises BH entschieden werden, ob dieser weiterhin aktiv bleibt oder durch die Warnung SW, bzw. Information SI ersetzt wird:

$$0 \leq a_{Necessary} \Rightarrow Information(SI)$$

$$a_{Break,Max} < a_{Necessary} < 0 \Rightarrow Bremshinweis(BH)$$

$$a_{Necessary} \leq a_{Break,Max} \Rightarrow Warnung(SW)$$

Wenn der Betrag der erforderlichen Bremsbeschleunigung $a_{Necessary}$ größer als der Betrag des Wertes für das komfortable Bremsen $a_{Comfort,Max}$ ist, muss der Bremshinweis durch die Geschwindigkeitswarnung SW ersetzt werden. Bei einem positiven erforderlichen Beschleunigungswert fährt das Fahrzeug langsamer als die erlaubte Höchstgeschwindigkeit, so dass die Information SI über die Höchstgeschwindigkeit angezeigt werden sollte.

Befindet sich das Fahrzeug innerhalb eines Straßenabschnittes mit Geschwindigkeitsbegrenzungsattribut (zwischen $P^*_{Start}$ und $P^*_{Ende}$), so wird vorzugsweise nur dann eine Warnung SLW ausgegeben, wenn die Geschwindigkeitsbegrenzung für einen definierten Zeitraum überschritten wird.

Befindet sich das Fahrzeug innerhalb der Strecke der Geschwindigkeitswarnung zwischen $P^*_{Start}$ und $P^*_{Ende}$, so erfolgt eine Warnung wenn:

$$v_{Average} > (v_{Limit} + \Delta v)$$

Für die aktuelle Durchschnittsgeschwindigkeit $V_{Average}$ wird gemäß der folgenden Formel jeweils der gleitende Mittelwert der gefahrenen Geschwindigkeit in den letzten n Sekunden berechnet, wobei n ein zuvor festgelegter Wert ist:

$$v_{Average} = \frac{\sum_{1 \cdots n} v_{Current-n}}{n}$$

**Patentansprüche**

**1.** Fahrerinformationsvorrichtung

- mit einer Ortungseinheit zur Bestimmung der aktuellen Fahrzeugposition, Mitteln zur Erfassung der Ist-Fahrzeuggeschwindigkeit sowie Mitteln zur Ausgabe von Informationen an den Fahrer,
- mit einer Einrichtung zum Überwachen eines ausgehend von der aktuellen Fahrzeugposition vor dem Fahrzeug liegenden Streckenverlaufs, die Mittel zur Erkennung einer vorgegebenen streckenabhängigen Höchstgeschwindigkeit umfasst,
- wobei die Einrichtung eingerichtet ist zum Überwachen bei aktuellem Überschreiten einer vorausliegenden vorgegebenen Höchstgeschwindigkeit die Ausgabe einer Bremsempfehlung (BH) mindestens so rechtzeitig zu veranlassen, dass die Ist-Geschwindigkeit mit einem vorgebbaren Verzögerungsverlauf auf die ab einer vorausliegenden definierten Position vorgegebene Höchstgeschwindigkeit reduzierbar ist,
- wobei die Einrichtung weiter eingerichtet ist, die Bremsempfehlung, (BH) durch eine Warnung (SW) bezüglich der vorausliegenden vorgegebenen Höchstgeschwindigkeit zu ersetzen, sobald das Fahrzeug mit dem vorgebbaren Verzögerungsverlauf bis zur vorausliegenden definierten Position nicht mehr auf die vorgegebene Höchstgeschwindigkeit abbremsbar ist,
- wobei die Einrichtung weiter eingerichtet ist, die geschwindigkeitsbezogenen Hinweise (Bremsempfehlung, Information, Warnung) jeweils durch eine zusätzliche Information zu ergänzen sind, aus der der örtliche Bezug der geschwindigkeitsbezogenen Hinweise zur aktuellen Fahrzeugposition hervorgeht.

**2.** Fahrerinformationsvorrichtung nach Anspruch 1, **dadurch gekennzeichnet, dass** die Bremsempfehlung (BH) durch eine Information (SI) bezüglich der vorausliegenden vorgegebenen Höchstgeschwindigkeit ersetzt wird, sobald das Fahrzeug auf die Höchstgeschwindigkeit abgebremst ist.

**3.** Fahrerinformationsvorrichtung nach Anspruch 1 oder 2, **dadurch gekennzeichnet, dass** die Information (SLI) oder Warnung (SLW) nach Erreichen der definierten Position weiterhin ausgegeben wird, solange die aktuelle Fahrzeugposition in einen Streckenabschnitt fällt, in dem die vorgegebene Höchstgeschwindigkeit gültig ist, wobei die Warnung (SLW) durch eine Information (SLI) ersetzt wird, sobald die vorgegebene Höchstgeschwindigkeit eingehalten wird.

**4.** Fahrerinformationsvorrichtung nach einem der Ansprüche 1 bis 3, **dadurch gekennzeichnet, dass** die Ausgabe der geschwindigkeitsbezogenen Hinweise (SI, BH, SW, SLI, SLW) durch Anzeige von Symbolen erfolgt, die für die vorgegebene Höchstgeschwindigkeit relevant sind und die für die Bremsempfehlung, die Information und die Warnung jeweils eine unterschiedliche optische Kennzeichnung aufweisen.

**5.** Fahrerinformationsvorrichtung nach Anspruch 4, **dadurch gekennzeichnet, dass** die Symbole als Verkehrszeichen ausgebildet sind.

**6.** Fahrerinformationsvorrichtung nach einem der Ansprüche 1 bis 5, **dadurch gekennzeichnet, dass** der Verzögerungsverlauf so vorgegeben wird, dass die maximale Bremsverzögerung je nach gewünschtem Komfort einen vorbestimmten Wert nicht überschreitet, wobei der Wert der maximalen Bremsverzögerung von bereitgestellten Parametern abhängig ist.

**7.** Fahrerinformationsvorrichtung nach Anspruch 6, **dadurch gekennzeichnet, dass** auf den Fahrzeugtyp oder den Fahrstil bezogene Parameter sukzessive durch die mit weiteren Fahrzeugeinrichtungen in Verbindung stehende Fahrerinformationsvorrichtung gelernt werden.

**8.** Fahrerinformationsvorrichtung nach einem der Ansprüche 1 bis 7, **dadurch gekennzeichnet, dass** Toleranzschwellen eingebbar sind, die von der Einrichtung zum Überwachen bei der Ausgabe von geschwindigkeitsbezogenen Hinweisen (SI, BH, SW, SLI, SLW) berücksichtigt werden.

**9.** Fahrerinformationsvorrichtung nach einem der Ansprüche 1 bis 8, **dadurch gekennzeichnet, dass** die Fahrerinformationsvorrichtung mit einem Navigationssystem verbunden ist, in dem der vor dem Fahrzeug liegende Streckenverlauf bekannt ist und in dem die zugehörigen digitalen Kartendaten einschließlich der vorgegebenen Höchstgeschwindigkeiten gespeichert sind.

**Claims**

**1.** Driver information apparatus

- having a locating unit for determining the current vehicle position, means for capturing the actual vehicle speed and means for outputting information to the driver,
- having a device for monitoring a road profile which is ahead of the vehicle starting from the current vehicle position, said device comprising means for recognizing a prescribed road-dependent maximum speed,
- wherein the device for monitoring is set up such that when a prescribed maximum speed ahead is currently being exceeded it prompts the output of a braking recommendation (BH) at least in such good time that the actual speed can be reduced with a prescribable deceleration profile to the maximum speed which is prescribed from a defined position ahead,
- wherein the device is also set up to replace the braking recommendation (BH) with a warning (SW) regarding the prescribed maximum speed ahead as soon as the vehicle is no longer able to be slowed down to the prescribed maximum speed with the prescribable deceleration profile before the defined position ahead,
- wherein the device is also set up to complement the speed-oriented advice (braking recommendation, information, warning) with a respective additional piece of information which reveals the local relationship between the speed-oriented advice and the current vehicle position.

**2.** Driver information apparatus according to Claim 1, **characterized in that** the braking recommendation (BH) is replaced with a piece of information (SI) regarding the prescribed maximum speed ahead as soon as the vehicle has slowed down to the maximum speed.

3. Driver information apparatus according to Claim 1 or 2, **characterized in that** the information (SLI) or warning (SLW) continues to be output after the defined position has been reached so long as the current vehicle position is in a road section in which the prescribed maximum speed is valid, the warning (SLW) being replaced with a piece of information (SLI) as soon as the prescribed maximum speed is observed.

4. Driver information apparatus according to one of Claims 1 to 3, **characterized in that** the speed-oriented advice (SI, BH, SW, SLI, SLW) is output by virtue of the display of symbols which are relevant to the prescribed maximum speed and which have a different visual identification for the braking recommendation, the information and the warning, respectively.

5. Driver information apparatus according to Claim 4, **characterized in that** the symbols are in the form of road signs.

6. Driver information apparatus according to one of Claims 1 to 5, **characterized in that** the deceleration profile is prescribed such that the maximum braking deceleration does not exceed a predetermined value according to the desired level of comfort, the value of the maximum braking deceleration being dependent on provided parameters.

7. Driver information apparatus according to Claim 6, **characterized in that** parameters oriented to the vehicle type or the driving style are progressively learned by the driver information apparatus, which is in contact with further vehicle devices.

8. Driver information apparatus according to one of Claims 1 to 7, **characterized in that** tolerance thresholds can be input which the device for monitoring takes into account when outputting speed-oriented advice (SI, BH, SW, SLI, SLW).

9. Driver information apparatus according to one of Claims 1 to 8, **characterized in that** the driver information apparatus is connected to a navigation system which knows the road profile ahead of the vehicle and which stores the associated digital map data, including the prescribed maximum speeds.

## Revendications

1. Dispositif d'information du conducteur

   - comprenant une unité de localisation pour déterminer la position actuelle du véhicule, des moyens pour détecter la vitesse réelle du véhicule ainsi que des moyens pour délivrer des informations au conducteur,
   - comprenant un dispositif pour surveiller un tracé d'itinéraire qui se trouve devant le véhicule à partir de la position actuelle du véhicule, lequel inclut des moyens pour détecter une vitesse maximale prédéfinie dépendante de l'itinéraire,
   - le dispositif de surveillance étant configuré pour, en cas de dépassement actuel d'une vitesse maximale prédéfinie à venir, provoquer la délivrance d'une recommandation de freinage (BH) au moins à un moment opportun de sorte que la vitesse réelle puisse être réduite avec une courbe de décélération à prédéfinir à la vitesse maximale prédéfinie à partir d'une position donnée à venir,
   - le dispositif étant en outre configuré pour remplacer la recommandation de freinage (BH) par un avertissement (SW) concernant la vitesse maximale prédéfinie à venir dès que le véhicule ne peut plus être freiné à la vitesse maximale prédéfinie avec la courbe de décélération à prédéfinir jusqu'à la position donnée à venir,
   - le dispositif étant en outre configuré pour compléter les notifications en rapport avec la vitesse (recommandation de freinage, information, avertissement) à chaque fois par une information supplémentaire de laquelle ressort la référence positionnelle des notifications en rapport avec la vitesse pour la position actuelle du véhicule.

2. Dispositif d'information du conducteur selon la revendication 1, **caractérisé en ce que** la recommandation de freinage (BH) est remplacée par une information (SI) relative à la vitesse maximale prédéfinie à venir dès que le véhicule a été freiné à la vitesse maximale.

3. Dispositif d'information du conducteur selon la revendication 1 ou 2, **caractérisé en ce que** l'information (SLI) ou l'avertissement (SLW) continue d'être délivré après avoir atteint la position définie tant que la position actuelle du véhicule se trouve dans une portion d'itinéraire dans laquelle la vitesse maximale prédéfinie s'applique, l'avertissement (SLW) étant remplacé par une information (SLI) dès que la vitesse maximale prédéfinie est maintenue.

4. Dispositif d'information du conducteur selon l'une des revendications 1 à 3, **caractérisé en ce que** la délivrance des notifications en rapport avec la vitesse (SI, BH, SW, SLI, SLW) s'effectue par l'affichage de symboles qui sont pertinents pour la vitesse maximale prédéfinie et qui présentent à chaque fois un identifiant visuel différent pour la recommandation de freinage, l'information et l'avertissement.

5. Dispositif d'information du conducteur selon la revendication 4, **caractérisé en ce que** les symboles sont réalisés sous la forme de panneaux de circulation.

6. Dispositif d'information du conducteur selon l'une des revendications 1 à 5, **caractérisé en ce que** la courbe de décélération est prédéfinie de telle sorte que le ralentissement de freinage maximum, suivant le confort souhaité, ne dépasse pas une valeur prédéfinie, la valeur du ralentissement de freinage maximum étant dépendant de paramètres fournis.

7. Dispositif d'information du conducteur selon la revendication 6, **caractérisé en ce que** les paramètres en rapport avec le type de véhicule ou le style de conduite sont successivement appris par le dispositif d'information du conducteur qui est en liaison avec d'autres équipements du véhicule.

8. Dispositif d'information du conducteur selon l'une des revendications 1 à 7, **caractérisé en ce que** des seuils de tolérance peuvent être saisis, lesquels sont pris en compte par le dispositif de surveillance lors de la délivrance des notifications en rapport avec la vitesse (SI, BH, SW, SLI, SLW).

9. Dispositif d'information du conducteur selon l'une des revendications 1 à 8, **caractérisé en ce que** le dispositif d'information du conducteur est relié avec un système de navigation dans lequel le tracé de l'itinéraire qui se trouve devant le véhicule est connu et dans lequel sont enregistrées les données de carte numérique associées, y compris les vitesses maximales prédéfinies.

Fig. 1

EP 2 161 699 B1

Fig. 2

12

300m 300m 300m

## Fig. 3

300m 300m 300m

## Fig. 4

300m 300m 300m

## Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19725075 A1
- DE 10358968 A1

- WO 2007024365 A2